# EUROPÄISCHE PATENTSCHRIFT

(11) **EP 1 269 767 B1**
(45) Veröffentlichungstag und Bekanntmachung des Hinweises auf die Patenterteilung: **17.10.2007**
(21) Anmeldenummer: 01935952.0
(22) Anmeldetag: 05.04.2001
(51) Int. Cl.: H04Q 3/00, H04L 12/64, H04M 7/00

(54) **VERARBEITUNG VON SIGNALISIERUNGSDATEN UND VERBINDUNGSSTEUERUNG VON TEILNEHMERN EINES PAKETVERMITTELNDEN KOMMUNIKATIONSNETZES**
PROCESSING SIGNALLING DATA AND CONTROLLING CONNECTIONS OF SUBSCRIBERS OF A PACKET-SWITCHING COMMUNICATIONS NETWORK
TRAITEMENT DE DONNEES DE SIGNALISATION ET DE COMMANDE DE CONNEXIONS D'ABONNES D'UN RESEAU DE COMMUNICATION A COMMUTATION DE PAQUETS

(30) Priorität: 06.04.2000 DE 10017228
(43) Veröffentlichungstag der Anmeldung: 02.01.2003
(73) Patentinhaber: NOKIA SIEMENS NETWORKS GMBH & CO. KG, 81541 München (DE)
(72) Erfinder: BRUMM, Thomas, 82131 Gauting-Königswiesen (DE); KLEINER, Patrick, 81476 München (DE); KLOTZ, Udo, 82061 Neuried (DE); KRESNIK, Robert, 2310 Slovenska Bistrica (SI); LÖBIG, Norbert, 64291 Darmstadt (DE); ROMANSKI, Irena, 82544 Egling (DE); ZINKL, Walter, A-1100 Wien (AT)
(86) Internationale Anmeldenummer: PCT/DE2001/001359
(87) Internationale Veröffentlichungsnummer: WO 2001/078416

(56) Entgegenhaltungen:
- EP-A- 0 966 145
- SKAPERDA N: "EWSD HEUTE - GEWACHSENE LEISTUNGSVIELFALT" TELCOM REPORT, Bd. 11 (1988) November/Dezember, Nr. 6, Seiten 200-203, XP000000767 ISSN: 0344-4724
- LAKSHMI-RATAN R A: "THE LUCENT TECHNOLOGIES SOFTSWITCH - REALIZING THE PROMISE OF CONVERGENCE" BELL LABS TECHNICAL JOURNAL, Bd. 4, Nr. 2, April 1999 (1999-04) - Juni 1999 (1999-06), Seiten 174-195, XP000851517 ISSN: 1089-7089

## Beschreibung

Die Erfindung betrifft ein Verfahren zur Verarbeitung von Signalisierungsdaten und zur Verbindungssteuerung von Teilnehmern in paketvermittelnden Kommunikationsnetzen. Ein Teilnehmer ist mit einem paketvermittelnden Kommunikationsnetz verbunden. Zur Teilnehmersignalisierung werden Signalisierungsinformationen zwischen einer Vermittlungsinstanz und dem Teilnehmer übertragen. Ferner betrifft die Erfindung ein Netzelement.

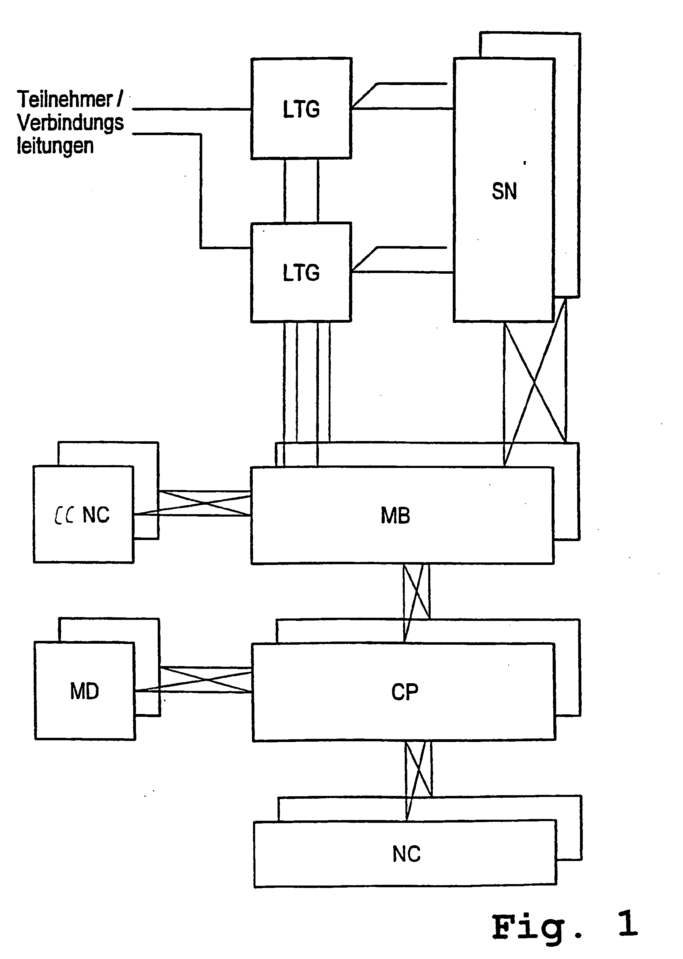

Konventionelle Telekommunikationsnetze haben beim Stand der Technik Vermittlungsknoten, d.h. Vermittlungsstellen bzw. Vermittlungssysteme. Diese Vermittlungsknoten umfassen Anschlussgruppen, sogenannte periphere Einrichtungen, zum Anschluss von Teilnehmern oder Leitungen, eine zentrale Rechnerplattform, eine Nachrichtenverteileinrichtung und weitere zentrale Einheiten, wie z.B. ein Koppelfeld, Protokollabschlusseinrichtungen des Nr. 7 Signalisierungssystems, Hintergrundspeicher und Bedieneinrichtungen. Ein Blockschaltbild eines solchen Vermittlungsknotens ist in Figur 1 dargestellt.

Die Anschlussgruppen erfüllen wesentliche, an die Sprachkanäle der Anschlussgruppen gebundene vermittlungstechnische Aufgaben. Sie enthalten daher vermittlungstechnische, betriebstechnische und administrative Programme sowie die der Anschlussgruppe zugehörigen Dateninformationen, wie Anschlusslage, Signalisierung, Berechtigungen, Rufnummern, individuelle Charakteristika von Verbindungsleitungen und Teilnehmeranschlüssen sowie den Ausbauzustand und die Konfiguration der Anschlussgruppe.

Die zentrale Rechnerplattform dient der koordinierten Steuerung des Verbindungsaufbaus und des Verbindungsabbaus sowie der Reaktion auf administrative und fehlerbedingte Konfigurationsveränderungen. Die peripheren Einrichtungen sind über das Nachrichtensystem untereinander und mit der gemeinsamen Rechnerplattform verbunden. Die weiteren zentralen Systemkomponenten stellen dem Vermittlungssystem des Vermittlungsknotens Spezialfunktionen, z.B. für die Durchschaltung von Sprachkanälen, für die Bearbeitung von Signalisierungsprotokollen, für die Realisierung von Betreiberschnittstellen oder für die Speicherung von Massendaten, zur Verfügung. Aus Gründen der Ausfallsicherheit sind die zentralen Komponenten des Vermittlungssystems redundant ausgelegt, d.h. z.B. doppelt. Wenn keine erhöhten Anforderungen an die vermittlungstechnische Verfügbarkeit der Teilnehmer und der Verbindungsleitungen des Vermittlungssystems gestellt sind, werden die Anschlussgruppen nicht redundant ausgeführt. Sollen jedoch stabile Verbindungen über den Ausfall einer Anschlussgruppe hinaus verfügbar sein, werden auch die Anschlussgruppen redundant ausgelegt.

Konventionelle Teilnehmer eines Vermittlungssystems sind direkt und physikalisch an die Anschlussgruppen angeschlossen, oder sie sind physikalisch an einem den Anschlussgruppen vorgelagerten Teilnehmerkonzentrator angeschlossen, der mit Hilfe genormter Konzentratorschnittstellen, wie z.B. einer Schnittstelle der V5.X-Schnittstellenreihe oder einer TR303-Schnittstelle, oder herstellerspezifischen Konzentratorschnittstellen, wie z.B. einer V93-Schnittstelle oder einer V95-Schnittstelle, an die Vermittlungsstelle angeschlossen ist. Für sprachkanalbezogene Verbindungen werden Signalisierungsdaten zur Teilnehmersignalisierung und Nutzdaten über die Vermittlungsstelle geführt. Die Nutzdaten werden hierbei mit einer Datenübertragungsrate von 64 kbit/s oder mit einem Vielfachen dieser Datenübertragungsrate durchgeschaltet. Die Signalisierungsdaten zur Teilnehmersignalisierung werden für Teilnehmergruppen, d.h. für mehrere Teilnehmer gemeinsam, mit Hilfe eines Kommunikationskanals gemäß der Definition der benutzten Konzentratorschnittstelle zwischen Teilnehmerkonzentrator auf der einen Seite und der Vermittlungsstelle auf der anderen Seite bidirektional übertragen. Neben der Signalisierung können im Signalisierungsweg zusätzlich end-to-end Paketdaten (user-to-user Signalling) oder Paketdaten zur Weiterreichung an ein Packet-Handler-Interface geführt werden.

Bei einer Verbindung zwischen Teilnehmern eines Paketnetzes (z.B. Voice Over Packet) werden die Nutzdaten üblicherweise nicht an eine Vermittlungsstelle herangeführt. Das Heranführen der Nutzdaten an eine Vermittlungsstelle ist nur dann erforderlich, wenn ein an der Verbindung beteiligter Teilnehmer an ein konventionelles leitungsvermittelndes Kommunikationsnetz, z.B. ein Kommunikationsnetz mit Zeitmultiplextechnik, angeschlossen ist und somit nicht direkt über das Paketnetz erreichbar ist - siehe EP-A-0 966 145. In einem solchen Fall ist eine Wandlung der Nutzdaten zur Anpassung an die in den unterschiedlichen Kommunikationsnetzen verwendete Übertragungstechnik erforderlich. Eine solche Wandlung ist insbesondere bei einem Übergang von einem Kommunikationsnetz mit Paket-Übertragungstechnik zu einem Kommunikationsnetz mit Zeitmultiplex-Übertragungstechnik (TDM-Technik) notwendig. Diese Wandlung wird sowohl bei der Übertragung von Daten des Kommunikationsnetzes mit Zeitmultiplex-Übertragungstechnik zu dem Kommunikationsnetz mit Paket-Übertragungstechnik als auch bei einer Übertragung von Daten des Kommtinikationsnetzes mit Paket-Übertragungstechnik zu dem Kommunikationsnetz mit Zeitmultiplex-Übertragungstechnik durchgeführt. Bei einer Telefonverbindung zwischen zwei Teilnehmern eines Paketnetzes werden ihre Nutzdaten vorzugsweise direkt über das Paketnetz ausgetauscht. Die Nutzdaten werden in diesem Fall somit im allgemeinen nicht über die Vermittlungsstelle mit Hilfe von Konvertern oder Gateways geführt.

Die Teilnehmer im Paketnetz sind bezüglich ihrer Signalisierung nicht hardwaremäßig einem Teilnehmerkonzentrator oder einer Konzentratorschnittstelle einer Vermittlungsstelle des leitungsvermittelnden Kommunikationsnetzes zugeordnet. Die Teilnehmer haben weder Leitungen zur analogen Signalisierung noch einen D-Kanal zur Signalisierung, der an einen festen, einer Vermittlungsstelle vorgelagerten Teilnehmerkonzentrator herangeführt ist. Die Signalisierung bei Verbindungen zwischen Teilnehmern eines paketvermittelnden Kommunikationsnetzes kann auch für Sprachverbindungen zwischen diesen Teilnehmern beim Stand der Technik nicht mit Hilfe einer konventionellen Vermittlungsstelle des leitungsvermittelnden Kommunikationsnetzes durchgeführt werden. Werden Verbindungswünsche von Telephonieteilnehmern eines Paketnetzes mit Hilfe einer Vermittlungsstelle oder eines Servers, der Vermittlungsfunktionen bereitstellt, bearbeitet, so erfolgt die Signalisierung mit Mitteln des Paketnetzes, d.h. die Signalisierungsdaten werden paketorientiert transportiert.

Telephonieteilnehmer in einem paketvermittelnden Kommunikationsnetz sind z.B. Teilnehmer, die mit einem auf einem Internet-Protokoll basierenden Netz direkt oder über eine Wählverbindung verbunden sind. Neben einem Internetzugriff werden dem Teilnehmer auch Sprach- und/oder Faxdienste zur Verfügung gestellt. Diese Sprach- und/oder Faxdienste sollen den gleichen Leistungsumfang haben, wie ihn konventionelle Telefone und Faxgeräte bieten. Die Nutzdaten eines solchen Teilnehmers werden gemäß Internet-Protokoll als Datenpakete übertragen, z.B. gemäß dem sogenannten Transmission Control Protocol / User Datagramm Protocol (TCP/UDP). Die Übertragung von Signalisierungsinformationen erfolgt im paketvermittelnden Kommunikationsnetz mit Hilfe von Signalisierungspaketen gemäß definierten Standards, wie z.B. H.323, H.225, H.245, H.450 und SIP.

In paketvermittelnden Kommunikationsnetzen erfolgt die Übertragung von Signalisierungsdaten und die Übertragung von Nutzdaten auf getrennten Übertragungswegen. Die Nutzdaten werden dem weiteren Teilnehmer direkt zugeführt. Ist eine Wandlung des Nutzdatenformats notwendig, so werden die Nutzdaten einer Schnittstelleneinheit zur Wandlung zugeführt, z.B. einem Mediagateway (MG). Die Signalisierungsdaten werden mit Hilfe von Signalisierungsdatenpaketen einer Vermittlungsinstanz zugeführt, welche die Verbindungssteuerung durchführt.

Die International Telecommunication Union (ITU) hat mit ihrem Gremium ITU-T den H.323-Standard für Datenübertragung in IP-basierten Kommunikationsnetzen definiert. Gemäß dem H.323-Standard sind Komponenten, wie z.B. Terminals, Gateways, Gatekeeper und Multipoint Control Units vorgesehen und definiert, die an einer solchen Verbindung beteiligt sind. Ein H.323-Terminal entspricht dem Teilnehmer des paketvermittelnden Kommunikationsnetzes. Gateways kommen dann zum Einsatz, wenn die Verbindung z.B. über ein öffentliches Telefonnetz geführt werden muss oder ein Gesprächspartner ein an eine Vermittlungsstelle des öffentlichen Telefonnetzes angeschlossener Teilnehmer ist. Multipoint Control Units sind vorgesehen, um z.B. Konferenzschaltungen aufzubauen.

Als zentrale Komponente ist der Gatekeeper am Verbindungsaufbau beteiligt. Dieser kann als Vermittlungsstelle im paketvermittelnden Kommunikationsnetz angesehen werden. Der Gatekeeper stellt seiner Zone Funktionen bereit, die unter anderem zur Zugangskontrolle, zur Signalisierung, zur Verbindungssteuerung und zur Vergebührung dienen. Mit Hilfe des Gatekeepers erfolgt auch die für den Zugang zum öffentlichen Telefonnetz notwendige Rufnummernzuordnung (E.164) zu der für den Teilnehmer des paketvermittelnden Kommunikationsnetzes gültigen Teilnehmeradresse. In einem auf dem Internet-Protokoll basierenden Kommunikationsnetz, in einem sogenannten IP-Netz, ist die Adresse des Teilnehmers die IP-Adresse. Der Gatekeeper ist somit keine Vermittlungsstelle eines öffentlichen Telekommunikationsnetzes, sondern eine Steuereinheit im IP-basierten Kommunikationsnetz. Eine solche Steuereinheit ist z.B. ein Server.

Wollen Netzbetreiber leitungsvermittelnder Kommunikationsnetze auch Teilnehmern paketvermittelnder Kommunikationsnetze Kommunikationsdienstleistungen anbieten, um so neue Kunden hinzuzugewinnen, müssen diese Netzbetreiber neuartige technische Ausrüstung hinzukaufen. Diese neuartige technische Ausrüstung hat gegenüber konventionellen Vermittlungsstellen andere Eigenschaften, z.B. in Bezug auf das Ausfallverhalten und die Performance, andere Standards der Bedienung und Vergebührung sowie andere Hersteller. Dadurch entstehen dem Netzbetreiber nicht nur erhebliche Anschaffungskosten, sondern auch zusätzliche Betriebskosten, z.B. für Unterweisungen des Bedienpersonals. Eine hohe Verfügbarkeit der neuartigen technischen Ausrüstung und das Implementieren von Dienst- und Leistungsmerkmalen sowie bekannter Vergebührungsstandards ist, wenn überhaupt, nur mit erheblichem finanziellen Aufwand möglich.

Soll eine konventionelle Vermittlungsstelle eines leitungsvermittelnden Kommunikationsnetzes die Verbindungssteuerung bzw. die Verarbeitung von Signalisierungsdaten für Teilnehmer eines paketvermittelnden Kommunikationsnetzes durchführen, so müssen die zur Teilnehmersignalisierung relevanten paketnetzspezifischen Signalisierungsverfahren in der Vermittlungsstelle implementiert werden. Weiterhin muss in der Vermittlungsstelle ein Signalisierungszugriff zum paketvermittelnden Kommunikationsnetz implementiert werden, sowie der softwaremäßige Zugriff auf die Teilnehmer des paketvermittelnden Kommunikationsnetzes sichergestellt sein. Diese völlig neuartigen Anforderungen an eine konventionelle Vermittlungsstelle erfordern eine aufwendige Anpassung und Umstrukturierung von Hardwarekomponenten und Softwarekomponenten. Für diese Änderungen und Umstrukturierungen ist ein erheblicher Entwicklungsaufwand notwendig.

Aufgabe der Erfindung ist es, ein Verfahren und eine Anordnung anzugeben, das bzw. die auf einfache Weise ein Netzelement eines leitungsvermittelnden Kommunikationsnetzes zur Teilnehmersignalisierung von Teilnehmern eines paketvermittelnden Kommunikationsnetzes nutzt.

Diese Aufgabe wird für ein Verfahren durch die Merkmale des Patentanspruchs 1 gelöst. Für eine Anordnung wird die Aufgabe durch die Merkmale des Patentanspruchs 25 gelöst. Vorteilhafte Weiterbildungen sind in den abhängigen Ansprüchen angegeben.

Bei dem Verfahren mit den Merkmalen des Patentanspruchs 1 wird eine konventionelle Konzentratorschnittstelle in dem Netzelement, das z.B. eine Vermittlungsstelle eines leitungsvermittelnden Kommunikationsnetzes ist, installiert. Durch ein solches Verfahren wird erreicht, dass der Aufwand zur Änderung der Software des Netzelementes gering ist und wenig interne Schnittstellen der Vermittlungsstelle von den Änderungen betroffen sind. Konventionelle Vermittlungsstellen, die als Netzelement in leitungsvermittelnden Kommunikationsnetzen genutzt werden, haben im allgemeinen, z.B. durch Redundanz, eine hohe Verfügbarkeit, wodurch Störungen und Ausfälle von Teilnehmeranschlüssen selten auftreten. Durch das Nutzen einer solchen Vermittlungsstelle zur Verarbeitung von Signalisierungsdaten und zur Verbindungssteuerung von Teilnehmern eines paketvermittelnden Kommunikationsnetzes haben auch diese Teilnehmer eine hohe Verfügbarkeit von Kommunikationsdiensten.

Durch das erfindungsgemäße Verfahren ist es weiterhin einfach möglich, Signalisierungsdaten zwischen einem Teilnehmer eines paketvermittelnden Kommunikationsnetzes und einer Vermittlungsstelle eines leitungsvermittelnden Kommunikationsnetzes auszutauschen. Die Übertragung der Nutzdaten kann somit durch die Vermittlungsstelle gesteuert werden. Eine Vergebührung gemäß den in Telekommunikationsnetzen üblichen Anforderungen ist einfach durchführbar. Mit Hilfe des Verfahrens kann die Steuerung sowohl für Verbindungen erfolgen, bei denen die Nutzdaten über die Vermittlungsstelle geführt werden, als auch für Verbindungen, bei denen die Nutzdaten direkt zwischen den Teilnehmern, z.B. mit Hilfe des paketvermittelnden Kommunikationsnetzes, übertragen werden.

Der Teilnehmer des paketvermittelnden Kommunikationsnetzes ist auch für Teilnehmer von leitungsvermittelnden Kommunikationsnetzen eindeutig adressierbar. Mit Hilfe des erfindungsgemäßen Verfahrens können gleichzeitig auch mehrere Verbindungen zu einem Teilnehmer des paketvermittelnden Kommunikationsnetzes aufgebaut werden. Mit Hilfe der erfindungsgemäßen Vermittlungsstelle kann der Teilnehmer des paketvermittelnden Kommunikationsnetzes mit weiteren Teilnehmern des paketvermittelnden Kommunikationsnetzes und/oder mit Teilnehmern des leitungsvermittelnden Kommunikationsnetzes eine Gruppe bilden. Den Teilnehmern der Gruppe stehen innerhalb der Gruppe weitere Dienst- und/oder Leistungsmerkmale zur Verfügung. Eine solche Gruppe kann z.B. eine CENTREX-Gruppe sein, die auch als CENTREX-Business-Group bezeichnet wird.

Die Verarbeitung von Signalisierungsdaten und die Verbindungssteuerung des Teilnehmers des paketvermittelnden Kommunikationsnetzes kann auf der Grundlage der für einen Basisanschluss eines leitungsvermittelnden Kommunikationsnetzes oder der für einen primären Multiplexanschluss eines leitungsvermittelnden Kommunikationsnetzes bekannten Leistungsmerkmale erfolgen. Somit ist auch eine nebenstellenartige Behandlung der Teilnehmer des paketvermittelnden Kommunikationsnetzes möglich. Die Vermittlungsstelle kann dem Teilnehmer des paketvermittelnden Kommunikationsnetzes damit Dienst- und/oder Leistungsmerkmale zur Verfügung stellen, die in leitungsvermittelnden Kommunikationsnetzen möglich sind.

Mit dem Installieren und Einrichten einer Konzentratorschnittstelle in einer Vermittlungsstelle werden Datenspeicher mit Teilnehmerbezug in den zentralen Einheiten der Vermittlungsstelle sowie in peripheren Einheiten der Vermittlungsstelle, wie z.B. in den Anschlussgruppen, verfügbar. In diesen Datenspeichern sind Eigenschaften der Teilnehmer gespeichert, die der Konzentratorschnittstelle zugeordnet sind. Solche Eigenschaften sind z.B. Rufnummer, Typ des Anschlusses, Verfügbarkeit von Leitungsmerkmalen, Sperrinformationen, Gruppenzugehörigkeit zu CENTREX usw. Weiterhin werden für die der Konzentratorschnittstelle zugeordneten Teilnehmer vermittlungstechnische Ressourcen, wie z.B. Prozessorkapazität, Signalisierungsterminierungskapazität und Nachrichtenverteilkapazität bereitgestellt.

Die in den peripheren Einheiten der Vermittlungsstelle erzeugten Signalisierungsdaten zur Teilnehmersignalisierung der Teilnehmer des paketvermittelnden Kommunikationsnetzes werden einer Paketsteuereinheit zugeführt, die z.B. direkt mit dem paketvermittelnden Kommunikationsnetz verbunden ist und die Signalisierungsdaten zur Teilnehmersignalisierung der Teilnehmer des paketvermittelnden Kommunikationsnetzes in Signalisierungspakete des paketvermittelnden Kommunikationsnetzes konvertiert. Die Administration und Zustandsänderungen, z.B. bei Ausfall und Wiederverfügbarkeit, der Konzentratorschnittstelle für Teilnehmer des paketvermittelnden Kommunikationsnetzes erfolgen auf gleiche Art und Weise wie bei Konzentratorschnittstellen, an die Teilnehmer des leitungsvermittelnden Kommunikationsnetzes angeschlossen sind. Durch die Verarbeitung von Signalisierungsdaten und die Verbindungssteuerung mit Hilfe einer konventionellen Vermittlungsstele ist ein Gatekeeper mit Vermittlungsfunktion nicht erforderlich. Die Funktion der Speicherung der aktuellen Erreichbarkeit eines paketbasierten Teilnehmers im Paketnetz und die Zuordnung seiner vermittlungstechnischen Adresse, d.h. seiner E.164-Rufnummer, zu seiner unter Umständen temporären Adresse im Paketnetz können von der Vermittlungsstelle vorgelagerten Servern durchgeführt werden. Diese Server übernehmen zugleich die Funktion der Zugangskontrolle (GK-RAS) und die Funktion eines Firewalls zum Paketnetz hin.

Durch das erfindungsgemäße Verfahren können Hersteller von Vermittlungsstellen für leitungsvermittelnde Kommunikationsnetze mit geringem Entwicklungsaufwand auch eine Lösung zur Verarbeitung von Signalisierungsdaten und zur Verbindungssteuerung von Teilnehmern paketvermittelnder Kommunikationsnetze anbieten. Mit Hilfe einer solchen erfindungsgemäßen Vermittlungsstelle kann bei einer Verbindung der Vermittlungsstelle zu einem leitungsvermittelnden und zu einem paketvermittelnden Kommunikationsnetz sowohl die Verbindungssteuerung von Teilnehmern des leitungsvermittelnden Kommunikationsnetzes als auch von Teilnehmern des paketvermittelnden Kommunikationsnetzes durchgeführt werden.

Bereits vorhandene leitungsvermittelnde Vermittlungsstellen des Herstellers können mit Hilfe des erfindungsgemäßen Verfahrens auch oder ausschließlich zur Verbindungssteuerung von Teilnehmern paketvermittelnder Kommunikationsnetze genutzt werden, d.h. die beim Netzbetreiber vorhandenen Vermittlungsstellen können durch den Hersteller beim Netzbetreiber entsprechend aufgerüstet werden. Investitionen für neue technische Ausrüstungen und für Schulungen des Bedien- und Wartungspersonals sind gering. Der Netzbetreiber muss bei einer Änderung der Teilnehmersignalisierung, z.B. bei der Einführung neuer Dienst- oder Leistungsmerkmale, nur ein Vermittlungssystem anpassen. Konventionelle Netzbetreiber können somit paketbasierten Teilnehmern in einem stark expandieren Marktsegment ohne großen Investitionsaufwand Kommunikationsdienstleistungen öffentlicher leitungsvermittelnder Kommunikationsnetze zur Verfügung stellen. Die Zuverlässigkeit, die Vergebührung, die Teilnehmeradministration sowie die Wartung und der Service der Vermittlungsstelle sind auch bei einem Einschluss von Teilnehmern paketvermittelnder Kommunikationsnetze wie bei einer konventionellen Vermittlungsstelle gegeben bzw. möglich. Sind zwei paketbasierte Teilnehmer an einer Verbindung beteiligt, so kann ihr Nutzdatenstrom ohne Medienkonversion im Paketnetz geführt werden, wodurch sich keine Verschlechterung der Sprachqualität ergibt.

Weitere Merkmale und Vorteile der Erfindung ergeben sich aus der folgenden Beschreibung, welche in Verbindung mit den beigefügten Zeichnungen die Erfindung an Hand von Ausführungsbeispielen erläutert. Darin zeigen:
- Figur 1: eine typische Architektur eines bekannten Vermittlungssystems mit nicht-redundanten Anschlussgruppen,
- Figur 2: eine Konzentratorschnittstelle des Typs V5.2, die an eine bekannte Vermittlungsstelle angeschlossen ist,
- Figur 3a: eine Vermittlungsstelle zum Durchführen des erfindungsgemäßen Verfahrens,
- Figur 3b: eine zweite Vermittlungsstelle zum Durchführen des erfindungsgemäßen Verfahrens,
- Figur 4: zwei Teilnehmer eines paketvermittelnden Kommunikationsnetzes, deren Signalisierungsdaten mit Hilfe des erfindungsgemäßen Verfahrens verarbeitet werden, wobei die Nutzdaten über die Vermittlungsstelle geführt sind, die die Signalisierungsdaten verarbeitet, und
- Figur 5: zwei Teilnehmer eines paketvermittelnden Kommunikationsnetzes, deren Signalisierungsdaten mit Hilfe des erfindungsgemäßen Verfahrens verarbeitet werden, wobei die Nutzdaten nicht über die Vermittlungsstelle geführt werden, die die Signalisierungsdaten verarbeitet.

In Figur 1 ist eine typische Struktur eines herkömmlichen Vermittlungssystems mit Hilfe eines Blockschaltbilds dargestellt. Ein solches Vermittlungssystem hat ein Koppelnetz SN (Switching Network), einen Nachrichtenverteiler MB (Message Buffer), einen Koordinationsprozessor CP (Coordination Processor), Bedieneinrichtungen NC, Hintergrundspeicher MD und Protokollabschlusseinrichtungen CCNC (z.B. gemäß Zeichengabesystem Nr. 7). Diese Elemente des Vermittlungssystems sind zur Erhöhung der Ausfallsicherheit redundant, d.h. z.B. doppelt, ausgeführt. Das Vermittlungssystem hat weiterhin Anschlussgruppen LTG (Line/Trunk Group), die mit dem Koppelnetz SN und dem Nachrichtenverteilsystem MB verbunden sind. Die Anschlussgruppen LTG werden auch als periphere Einheiten des Vermittlungssystems bezeichnet und dienen zum Anschluss von Teilnehmern und Verbindungsleitungen sowie zum Anschluss von Konzentratorschnittstellen, mit deren Hilfe z.B. separat angeordnete Anschlusseinheiten angeschlossen werden können. Wenn keine erhöhten Anforderungen an die vermittlungstechnische Verfügbarkeit der Teilnehmer und Verbindungsleitungen des Vermittlungssystems gestellt sind, werden die Anschlussgruppen LTG nicht redundant ausgeführt.

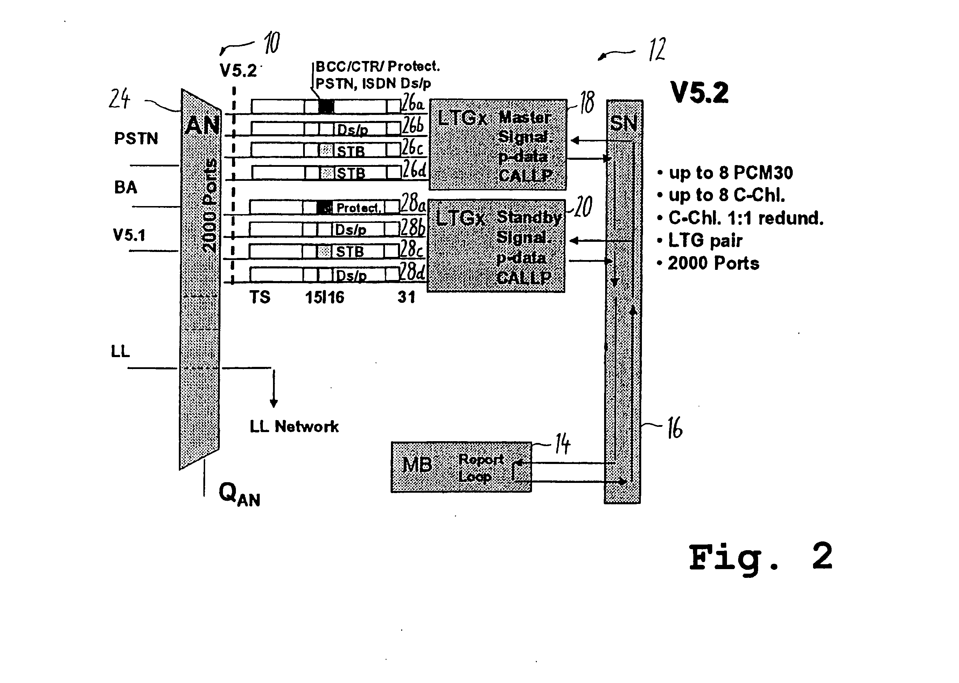

In Figur 2 sind eine Konzentratorschnittstelle 10 und eine Vermittlungsstelle 12 sowie Baueinheiten der Vermittlungsstelle dargestellt. Die Vermittlungsstelle 12 hat ein Nachrichtenverteilsystem 14, ein Koppelnetz 16 und Anschlussgruppen 18, 20. Die Konzentratorschnittstelle 10 hat einen Anschlussbereich 24, der mit Hilfe von acht PCM-Strecken 26a bis 26d, 28a bis 28d mit den Anschlussgruppen 18, 20 verbunden ist. Ein über die Konzentratorschnittstelle 10 angeschlossener Teilnehmeranschlusskonzentrator wird auch als Access Network (AN) bezeichnet. Mit Hilfe der PCM-Strecken 26a bis 26d, 28a bis 28d werden sowohl Nutzdaten als auch Signalisierungs- und Steuerdaten zwischen den Anschlussgruppen 18, 20 und dem Teilnehmeranschlusskonzentrator übertragen. Die der Teilnehmersignalisierung und der Übertragung von Steuerinformationen und Meldungen dienenden Daten werden mit Hilfe von Kanälen der Konzentratorschnittstelle 10 übertragen.

Die Signalisierungs- und Steuerkanäle haben z.B. eine Datenübertragungskapazität von 64 kbit/s und werden in den PCM-Strecken 26a bis 26d, 28a bis 28d zwischen den Anschlussgruppen 18, 20 und dem Teilnehmeranschlusskonzentrator geführt. Ist ein großes Signalisierungs- und Steuerdatenaufkommen bei der Konzentratorschnittstelle 10 zu erwarten, kann die Konzentratorschnittstelle 10 eine Vielzahl von Signalisierungs- und Steuerkanälen umfassen.

Im Rahmen des Einrichtens, der Konfiguration und der Inbetriebnahme der Konzentratorschnittstelle 10 in der Vermittlungsstelle 12 werden für die Konzentratorschnittstelle 10 Datenspeicher mit Teilnehmerbezug in den zentralen Baueinheiten der Vermittlungsstelle 12 und in den Anschlussgruppen 18, 20 bereitgestellt. In diesen Datenspeichern werden die Eigenschaften der über diese Konzentratorschnittstelle 10 angeschlossenen Teilnehmer gespeichert. Weiterhin werden durch Einrichten, Konfiguration und Inbetriebnahme der Konzentratorschnittstelle 10 vermittlungstechnische Ressourcen, wie z.B. Prozessorkapazität, Signalisierungsterminierungskapazität, Nachrichtentransferkapazität für die über die Konzentratorschnittstelle 10 angeschlossenen Teilnehmer bereitgestellt.

Die über die Konzentratorschnittstelle 10 anschließbaren Teilnehmer können Teilnehmer mit einem ISDN-Basisanschluss, einem ISDN-Primärmultiplexanschluss oder einem analogen Teilnehmeranschluss sein. Sowohl Hauptanschluss als auch Nebenstellenanschluss sind möglich. Mit Hilfe einer solchen Konzentratorschnittstelle 10 lässt sich bedingt durch die zugeordneten Anschlussgruppen eine beschränkte Teilnehmerzahl, z.B. 2000 Teilnehmer, anschließen. Die Konzentratorschnittstelle 10 umfasst z.B. acht PCM30-Strecken, wobei insgesamt acht Signalisierungs- und Steuerkanäle enthalten sind. Die Konzentratorschnittstelle 10 ist ein Beispiel einer V5.2-Schnittstelle. Zur genaueren funktionalen Beschreibung wird auf den Standard ETS 300 347 zu dieser Schnittstelle verwiesen.

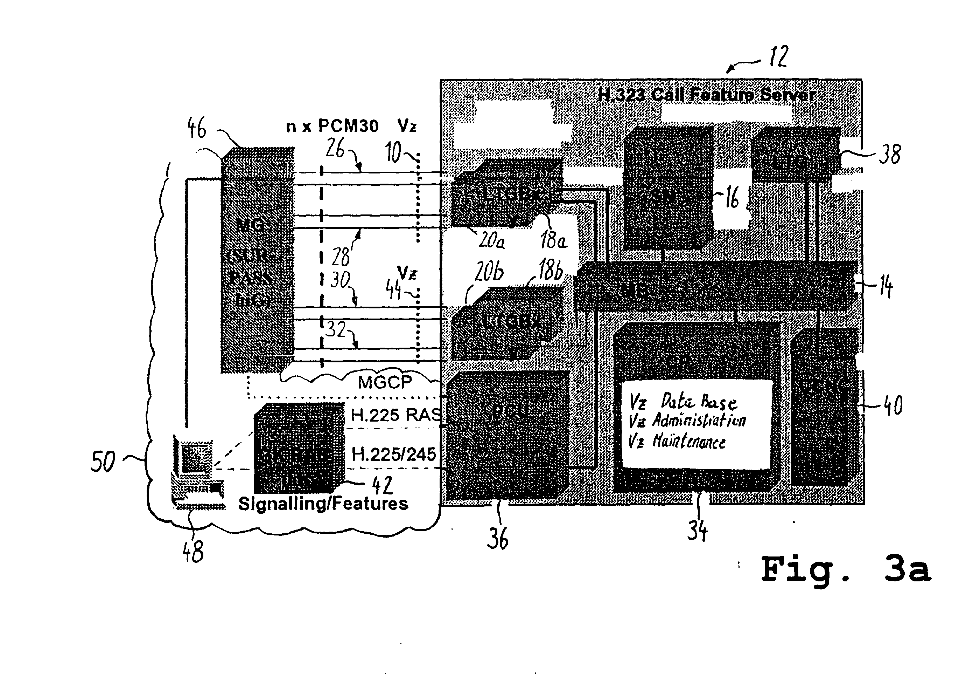

In Figur 3a ist eine Vermittlungsstelle 12 dargestellt, die Anschlussgruppen 18a, 20a hat, durch die eine Konzentratorschnittstelle 10 angesteuert wird. Mit Hilfe von Anschlussgruppen 18b, 20b wird eine zweite Konzentratorschnittstelle 44 angesteuert. Die Anschlussgruppen 18a, 18b, 20a, 20b sind mit dem Nachrichtenverteilsystem 14 der Vermittlungsstelle 12 verbunden. Das Nachrichtenverteilsystem 14 der Vermittlungsstelle 12 ist weiterhin mit dem Koppelnetz 16 der Vermittlungsstelle, einem Kommunikationsprozessor 34 und einer Protokollabschlusseinrichtung 40 verbunden, die z.B. eine Protokollabschlusseinrichtung des Zeichengabesystems Nr. 7 sein kann. Das Nachrichtenverteilsystem 14 ist weiterhin mit einer Paketsteuereinheit 36 verbunden.

Die Konzentratorschnittstelle 10 umfasst acht PCM30-Strecken. Jeweils vier der acht PCM30-Strecken sind an die Anschlussgruppen 18a, 20a angeschlossen, von denen in Figur 3a jeweils nur zwei PCM30-Strecken dargestellt sind. Die Konzentratorschnittstelle 44 umfasst ebenfalls acht PCM-Strecken. Von diesen acht PCM-Strecken sind an die Anschlussgruppen 18b, 20b jeweils vier PCM30-Strecken 30, 32 angeschlossen, von denen ebenfalls jeweils nur zwei dargestellt sind. Die PCM30-Strecken 26, 28 werden zu einem Mediagateway 46 geführt. Die PCM30-Strecken 30, 32 werden ebenfalls zu dem Mediagateway 46 geführt. Das Mediagateway 46 bildet eine Schnittstelle zwischen dem leitungsvermittelnden Kommunikationsnetz und einem paketvermittelnden Kommunikationsnetz 50. Ein Teilnehmer 48 ist Teilnehmer des paketvermittelnden Kommunikationsnetzes 50. Das paketvermittelnde Kommunikationsnetz 50 ist ein IP-Netz. Der Teilnehmer 48 ist an der Konzentratorschnittstelle 10 eingerichtet.

Der Koordinationsprozessor 34 sowie weitere zentrale Baueinheiten der Vermittlungsstelle 12 stellen den Konzentratorschnittstellen 10, 44 insbesondere Speicherbereiche in der Datenbasis der Vermittlungsstelle 12, Rechenkapazität und Signalisierungskapazität zur Teilnehmersignalisierung, zur Teilnehmeradministrierung sowie für Service und Wartung der Konzentratorschnittstelle 10, 44 und der Teilnehmeranschlüsse bereit, die über diese Schnittstellen 10, 44 angeschlossen sind. Bei einer Verbindung zwischen dem Teilnehmer 48 und einem weiteren IP-basierten, an der Konzentratorschnittstelle 44 eingerichteten Teilnehmer werden die Nutzdaten vom Endgerät des Teilnehmers 48 mit Hilfe des IP-Netzes 50 dem Mediagateway 46 zugeführt. Der Teilnehmer 48 überträgt die Nutzdaten dabei als Datenpakete zum Mediagateway 46.

Das Mediagateway 46 wandelt diese Datenpakete in Daten des leitungsvermittelnden Kommunikationsnetzes der Vermittlungsstelle 12 um und überträgt sie mit Hilfe der PCM30-Strecken 26, 28 zu den Anschlussgruppen 18a, 20a. Diese Nutzdaten werden von den Anschlussgruppen 18a, 20a mit Hilfe nicht dargestellter Verbindungen zwischen den Anschlussgruppen 18a, 20a und dem Koppelnetz 16 übertragen. Das Koppelnetz 16 schaltet die Verbindung zu dem weiteren Teilnehmer, welcher an der Konzentratorschnittstelle 44 eingerichtet ist. Die Nutzdaten des Teilnehmers 48 werden vom Koppelnetz 16 zu einer der Anschlussgruppen 18b, 20b übertragen. Mit Hilfe der PCM30-Strecken 30, 32 werden diese Daten von den Anschlussgruppen 18b, 20b über die Konzentratorschnittstelle 44 zum Mediagateway 46 übertragen, das diese Daten in Datenpakete umwandelt, die dem weiteren Teilnehmer mit Hilfe des IP-Netzes 50 zugeführt werden.

Die Übertragung der Nutzdaten des weiteren Teilnehmers in Richtung Teilnehmer 48 erfolgt sinngemäß umgekehrt. Der weitere Teilnehmer kann auch ein Teilnehmer des leitungsvermittelnden Kommunikationsnetzes sein, der z.B. über eine weitere Anschlussgruppe 38 der Vermittlungsstelle 12 erreichbar ist. Ist der Teilnehmer ein Teilnehmer einer weiteren Vermittlungsstelle des leitungsvermittelnden Kommunikationsnetzes, werden die Daten zwischen der weiteren Vermittlungsstelle und der Vermittlungsstelle 12 mit Hilfe des leitungsvermittelnden, Kommunikationsnetzes übertragen. Der weitere Teilnehmer kann aber auch ein weiterer Teilnehmer des paketvermittelnden Kommunikationsnetzes sein, der über das Mediagateway 46 oder ein weiteres Mediagateway mit der Vermittlungsstelle 12 oder einer weiteren Vermittlungsstelle verbunden ist.

Bei der Vermittlungsstelle 12 werden die Signalisierungsdaten zur Teilnehmersignalisierung nicht von den Anschlussgruppen 18a, 18b, 20a, 20b auf Zeitschlitze der PCM-Strecken bzw. von in den PCM-Strecken geführten Kommunikationskanälen zu den die Anschlussgruppen 18a, 18b, 20a, 20b übertragen, wie dies beim Anschluss von Konzentratorschnittstellen 10, 44 mit konventionellen Teilnehmern bekannt ist. Die Signalisierungsinformationen zur Teilnehmersignalisierung werden über das Nachrichtenverteilsystem 14 zwischen den Anschlussgruppen 18a, 18b, 20a, 20b und der Paketsteuereinheit 36 ausgetauscht. Die Paketsteuereinheit 36 übernimmt dabei die Koordination der Steuerung des Mediagateways 46 und die Umsetzung der Teilnehmersignalisierung des Teilnehmers 48 auf das im IP-Netz 50 durch den Teilnehmer 48 genutzte Signalisierungsverfahren H.323. Die Verbindung zwischen Paketsteuereinheit 36 und Mediagateway 46 zur Steuerung des Mediagateways 46 ist durch eine Punktlinie dargestellt. Die Teilnehmersignalisierung des Teilnehmers 48 erfolgt über einen Gatekeeper 42, der mit der Paketsteuereinheit 36 verbunden ist. Die Verbindung zwischen der Paketsteuereinheit 36 und dem Gatekeeper 42 ist durch zwei Strichlinien dargestellt, wobei die Teilnehmersignalisierung zwischen der Paketsteuereinheit 36 und dem Gatekeeper 42 sowie zwischen dem Gatekeeper 42 und dem Teilnehmer 48 mit Hilfe des H.225/H.245-Standards erfolgt. Der Gatekeeper 42 stellt eine Zugangskontrollfunktion und eine Firewall-Funktion bereit.

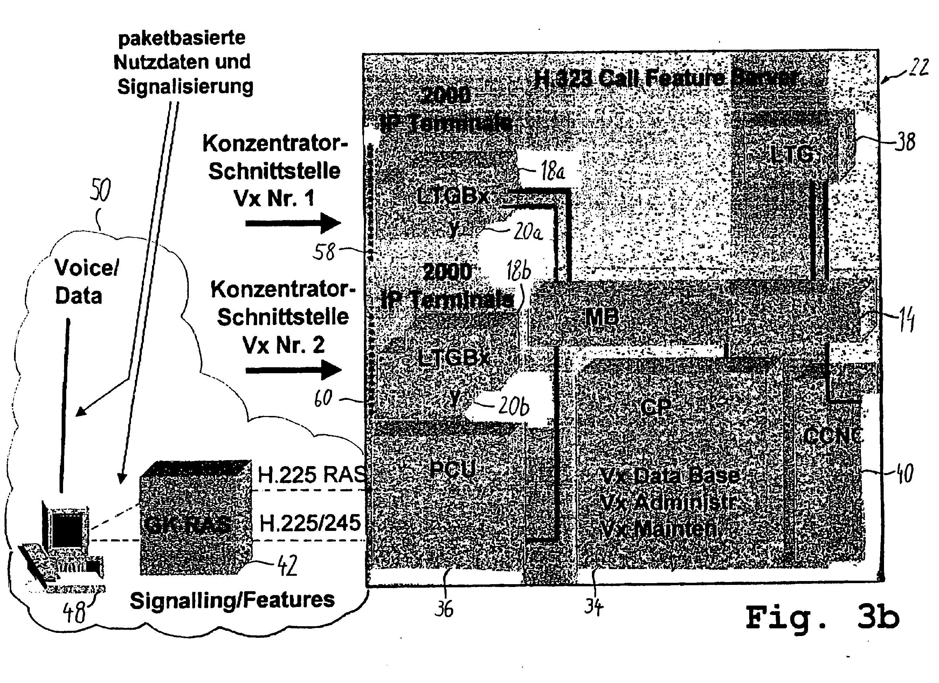

Figur 3b zeigt eine zweite Vermittlungsstelle 22 ähnlich der in Figur 3a dargestellten Vermittlungsstelle 12. Die Vermittlungsstelle 22 hat gegenüber der Vermittlungsstelle 12 der Figur 3a kein Koppelnetz zum Schalten von Nutzdatenverbindungen. Die Teilnehmersignalisierung und die Verbindungssteuerung erfolgt mit Hilfe der Vermittlungsstelle 22 in gleicher Art und Weise, wie dies bereits für die Vermittlungsstelle 12 der Figur 3a beschrieben worden ist. Die Vermittlungsstelle 22 hat eine erste Konzentratorschnittstelle Vx 58 und eine zweite Konzentratorschnittstelle Vx 60, die jedoch im Gegensatz zu den Konzentratorschnittstellen 10 und 44 der Figur 3 keine PCM-Strecken umfassen. Die Nutzdaten werden bei dem Ausführungsbeispiel gemäß Figur 3b ausschließlich über das IP-Netz 50 übertragen bzw. geführt.

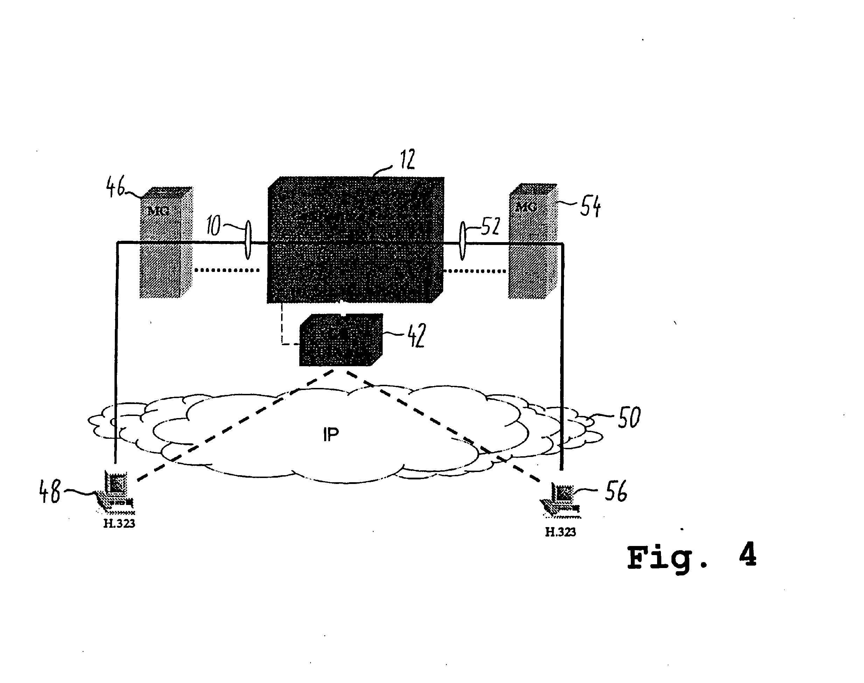

In Figur 4 ist eine Anordnung dargestellt, bei der die Vermittlungsstelle 12 eine Sprachverbindung zwischen dem Teilnehmer 48 und einem weiteren Teilnehmer 56 schaltet. Sowohl der Teilnehmer 48 als auch der Teilnehmer 56 sind über das IP-Netz 50 angeschlossen. Das Mediagateway 46 ist mit Hilfe von PCM-Strecken über die Konzentratorschnittstelle 10 mit der Vermittlungsstelle 12 verbunden. Ein Mediagateway 54 ist mit Hilfe von PCM-Strecken über eine Konzentratorschnittstelle 52 mit der Vermittlungsstelle 12 verbunden. Beide Mediagateways 46, 54 sind mit dem IP-Netz 50 verbunden. Die Nutzdaten für die Sprachverbindung zwischen dem Teilnehmer 48 und dem Teilnehmer 56 werden zwischen dem Teilnehmer 48 und dem Mediagateway 46 sowie zwischen dem Mediagateway 54 und dem Teilnehmer 56 mit Hilfe von Datenpaketen übertragen. Die Mediagateways 46, 54 wandeln diese Datenpakete in Daten eines leitungsvermittelnden Kommunikationsnetzes um und übertragen diese mit Hilfe der PCM-Strecken zwischen den Mediagateways 46 und 54 über die Schnittstellen 10 und 52 zur Vermittlungsstelle 12.

Das Koppelnetz 16 der Vermittlungsstelle 12 schaltet eine Verbindung zum Übertragen dieser Nutzdaten. Die Signalisierungsdaten zur Teilnehmersignalisierung werden über das Nachrichtenverteilsystem 14 mit der Paketsteuereinheit 36 ausgetauscht. Die Paketsteuereinheit 36 hat jeweils eine Verbindung zum Mediagateway 46 und zum Mediagateway 54, die in Figur 4 durch Punktlinien angedeutet ist. Wie bereits in Figur 3a beschrieben, steuert die Paketsteuereinheit 36 die Mediagateways 46, 54. Die Teilnehmersignalisierung wird von der Paketsteuereinheit 36 der Vermittlungsstelle 12 zum Gatekeeper 42 IP-basiert übertragen. In Figur 4 ist diese Übertragung mit Hilfe einer Strichlinie dargestellt. Der Gatekeeper 42 überträgt die Teilnehmersignalisierungsdaten des Teilnehmers 48 und die Teilnehmersignalisierungsdaten des Teilnehmers 56 mit Hilfe des IP-Netzes 50. Diese Übertragung zwischen dem Gatekeeper 42 und den Teilnehmern 48, 56 ist ebenfalls jeweils mit einer Strichlinie dargestellt. Somit werden die Signalisierungsinformationen zur Teilnehmersignalisierung bei dem erfindungsgemäßen Verfahren nicht mehr über die PCM-Strecken der Konzentratorschnittstellen 10, 52 geführt. Die Teilnehmersignalisierung wird vielmehr über die Paketsteuereinheit 36 geführt, die sowohl die Mediagateways 46, 54 steuert als auch die Teilnehmersignalisierung auf die Bedürfnisse der Teilnehmer 48, 56 des IP-Netzes 50, wie z.B. auf H.323- oder SIP-Signalisierung, umsetzt und ausbringt sowie in umgekehrter Richtung die IP-basierte Teilnehmersignalisierung auf den Signalisierungsstandard der Konzentratorschnittstelle 10, 52 umsetzt und diese zu der jeweiligen Anschlussgruppe weiterleitet.

In der Datenbasis der Vermittlungsstelle 12 werden die Teilnehmer 46, 48 als Teilnehmer eines neuen Typs eingeführt. Diesen Teilnehmern können Eigenschaften eines ISDN-Basisanschlusses oder eines ISDN-Nebenstellenanschlusses zugeordnet werden. Jedoch werden die Teilnehmer des paketvermittelnden Kommunikationsnetzes in der Datenbasis so gekennzeichnet, dass sie nur an Konzentratorschnittstellen 10, 44, 52 anschließbar sind, bei denen die Teilnehmersignalisierung der ihnen zugeordneten Teilnehmer 46, 48 direkt über eine Paketsteuereinheit 36 erfolgt. Durch das Einrichten der Teilnehmer 48, 56 in der Datenbasis der Vermittlungsstelle 12 können den Teilnehmer 48, 56 Leistungsmerkmale von Haupt- und Nebenstellenanschlüssen bereitgestellt werden. An die Konzentratorschnittstellen 10, 44, 52 können keine konventionellen Teilnehmer des leitungsvermittelnden Kommunikationsnetzes angeschlossen werden, da über diese Schnittstellen 10, 44, 52 keine direkte, über die Zeitschlitze der zugeordneten PCM30-Strecken geführte Teilnehmersignalisierung mehr erfolgt. Diese Konzentratorschnittstellen 10, 44, 52 können somit auch als virtuelle Konzentratorschnittstellen bezeichnet werden.

In der Datenbasis der Vermittlungsstelle 12 werden diese Schnittstellen 10, 44, 52 ebenfalls gekennzeichnet, so dass an diese Schnittstellen 10, 44, 52 keine konventionellen Teilnehmer des leitungsvermittelnden Kommunikationsnetzes anschließbar sind. Sowohl bei der Konfiguration der Schnittstellen 10, 44, 52 als auch beim Einrichten und der Konfiguration der Teilnehmer 48, 56 erfolgt eine administrative Überprüfung, durch die sichergestellt ist, dass an die Schnittstellen 10, 44, 52 keine konventionellen Teilnehmer anschließbar sind und dass die Teilnehmer 48, 56 nur Schnittstellen 10, 44, 52 zugeordnet werden, die das erfindungsgemäße Verfahren zum Anschluss von Teilnehmern 48, 56 eines paketvermittelnden Kommunikationsnetzes 50 unterstützen.

Das Führen des Nutzdatenstroms über die Vermittlungsstelle 12 ermöglicht eine Sprachverarbeitung, insbesondere von Tönen, von Ansagen, Dialogen und Zweitonsignalen, die in konventioneller Weise durch die Vermittlungsstelle eingebracht und/oder verarbeitet werden können. Zum Einstellen bzw. zum Steuern der Gateways 46, 54 werden insbesondere Ereignisse genutzt, die in der vermittlungstechnisch aktiven Anschlussgruppe der Vermittlungsstelle 12 entstehen und die Durchschaltung eines Zeitschlitzes einer der Konzentratorschnittstelle 10, 52 zugeordneten PCM-Strecke auf einen Teilnehmer-Kanal des Teilnehmers 48, 50 betreffen. Beginn und Ende einer derartigen Zuordnung wird von der Anschlussgruppe 18a, 18b, 20a, 20b zur Paketsteuereinheit 36 übertragen und führt hier zur entsprechenden Einstellung von Gateway 46, 54 und Endgerät des Teilnehmers 48, 50.

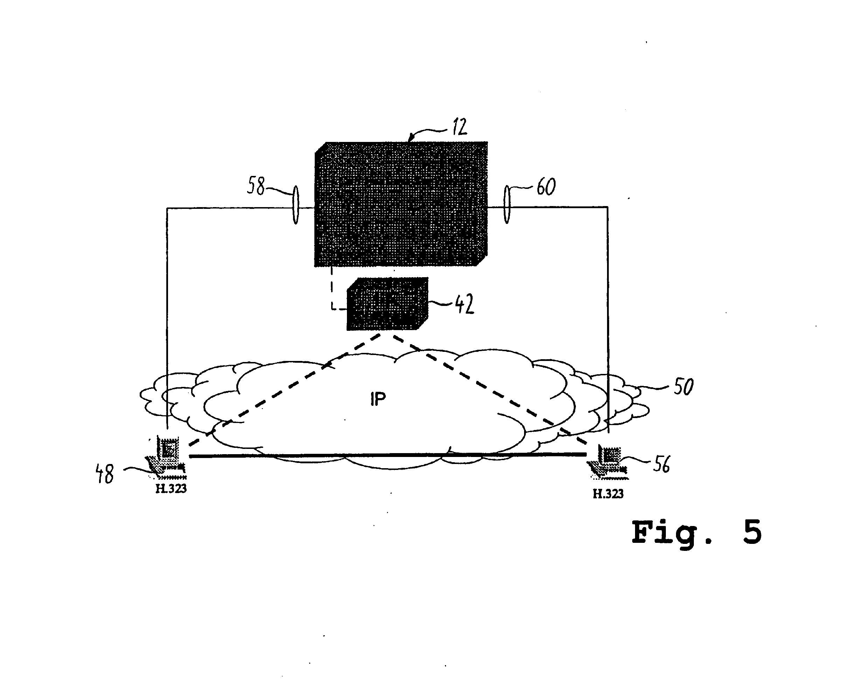

In Figur 5 ist eine weitere Anordnung zur Verarbeitung von Signalisierungsdaten und zur Verbindungssteuerung von Teilnehmern 48, 56 dargestellt, die über das IP-Netz 50 angeschlossen sind. Bei dem in Figur 5 dargestellten Ausführungsbeispiel werden die Nutzdaten zwischen dem Teilnehmer 48 und dem Teilnehmer 56 nicht über die Vermittlungsstelle 12 geführt, sondern direkt über das IP-Netz 50 übertragen. Für eine solche Verbindung zwischen dem Teilnehmer 48 und dem Teilnehmer 56 werden die Mediagateways 46 und 54 nicht benötigt. Auch kann auf die PCM30-Strecken der Konzentratorschnittstelle 10 an den Anschlussgruppen 18a, 20a und verzichtet werden, da keine Nutzdaten über die Anschlussgruppen 18a, 20a zu übertragen sind. Gleiches gilt für die Konzentratorschnittstelle 52.

In der Datenbasis der Vermittlungsstelle 12 ist der Teilnehmer 48 der Konzentratorschnittstelle 10 und der Teilnehmer 56 der Konzentratorschnittstelle 52 zugeordnet. Dies wird durch die dünn ausgezogene Verbindungslinie zwischen der Schnittstelle 10 und dem Teilnehmer 48 sowie zwischen der Schnittstelle 52 und dem Teilnehmer 56 angedeutet. Die Teilnehmersignalisierung der Teilnehmer 48, 56 erfolgt wie bereits in Figur 4 beschrieben. Die Paketsteuereinheit 36 der Vermittlungsstelle 12 führt bei dem in Figur 5 dargestellten Ausführungsbeispiel die Signalisierungsdaten ebenfalls dem Gatekeeper 42 zu. Der Gatekeeper 42 hat die gleiche Funktionalität wie der im Ausführungsbeispiel der Figur 4 beschriebene Gatekeeper.

Wie bereits in der Beschreibung zu Figur 4 erwähnt, werden die Konzentratorschnittstellen 10, 44, 52 und die Teilnehmer 48, 56 in der Datenbasis der Vermittlungsstelle 12 gekennzeichnet. Die Kennzeichnung der Konzentratorschnittstelle 10, 44, 52 erlaubt der Software der Anschlussgruppen 18a, 18b, 20a, 20b auf Aktionen zu verzichten, die beim Anschluss von Teilnehmern 48, 56 paketvermittelnder Kommunikationsnetze 50 nicht mehr sinnvoll sind. Insbesondere wird die Aktivierung der Steuer- und Signalisierungskanäle der Konzentratorschnittstelle 10, 44, 52 unterbunden. Auch kann die Inbetriebnahme der den Konzentratorschnittstellen 10, 44, 52 zugeordneten PCM-Strecken 26, 28, 30, 32 unterbunden werden, was im vorliegenden Ausführungsbeispiel erforderlich ist. Den zentralen Teilen der Vermittlungsstelle 12 wird jedoch die Verfügbarkeit der nicht mehr benötigten Funktionen sowie der Vollzug nicht mehr benötigter Funktionen signalisiert, um insbesondere unerwünschte oder nicht sinnvolle Fehlerreaktionen zu vermeiden bzw. um den Anpassungsaufwand in den zentralen Teilen der Vermittlungsstelle 12 gering zu halten. Zur Vereinfachung können ferner für die Vermittlungsstelle 12 unverzichtbare, aber für diese Konzentratorschnittstellen 10, 44, 52 nicht relevante Attribute auf der Bedienerschnittstelle vom System automatisch generiert werden und müssen somit nicht über die Bedienerschnittstelle der Vermittlungsstelle 12 durch eine Bedienperson eingebracht werden.

Mit Hilfe der Vermittlungsstelle 12 ist es möglich, die Teilnehmer 48, 56 mit Hilfe einer Rufnummer eines leitungsvermittelnden Kommunikationsnetzes, z.B. einer Rufnummer gemäß E.164, über das IP-Netz 50 zu erreichen. Die Funktion der Speicherung der aktuellen Erreichbarkeit des Teilnehmers 48, 56 des IP-Netzes 50 sowie die Zuordnung seiner Rufnummer zu einer Adresse im IP-Netz 50 können entweder mit Hilfe der Datenbasis der Vermittlungsstelle 12 oder mit Steuereinheiten erfolgen, die mit der Vermittlungsstelle 12 verbunden sind. Solche Steuereinheiten können z.B. Server sein. Die Paketsteuereinheit 36 ermittelt mit Hilfe dieser Steuereinheit an Hand der E.164 Rufnummer die Teilnehmeradressen des Teilnehmers 48 und des Teilnehmers 56 im IP-Netz 50, und damit seine Verfügbarkeit für eine von einem anderen Teilnehmer erfolgende Belegung, d.h. für eine B-seitige Belegung. Im Falle einer A-seitigen Belegung erfolgt die Umsetzung der A-Rufnummer auf die für den Teilnehmer zuständige Konzentratorschnittstelle, womit die A-seitig vermittlungstechnisch zuständige Anschlussgruppe ausgewählt wird. Die voranstehende Server-Funktion wurde im Rahmen des Ausführungsbeispiels der Figuren 3a und 3b als GK-RAS bezeichnet.

Bei anderen Ausführungsbeispielen ist es auch möglich, dass die Konzentratorschnittstelle 10, 44, 52, 58, 60 SDH-Strecken umfasst.

## Patentansprüche

1. Verfahren zur Verarbeitung von Signalisierungsdaten und zur Verbindungssteuerung in einem paketvermittelnden Kommunikationsnetz,
bei dem ein paketvermittelndes Kommunikationsnetz (50) mindestens einen Teilnehmer (48, 56) umfasst,
ein Netzelement (12, 22), mit Hilfe mindestens einer Anschlusseinheit (18, 20) eine Konzentratorschnittstelle (10, 44, 52, 58, 60) steuert und dieser Ressourcen zur Verfügung stellt,
zwischen mindestens einer Paketsteuereinheit (36) des Netzelements (12, 22) und der Anschlusseinheit (18, 20) des Netzelements (12, 22) über ein Nachrichtenverteilsystem (14) des Netzelementes (12, 22) Signalisierungsdaten zur Teilnehmersignalisierung des Teilnehmers (48, 56) übertragen werden, die Signalisierungsdaten des Netzelementes (12, 22) von der Paketsteuereinheit (36) in Signalisierungspakete des paketvermittelnden Kommunikationsnetzes (50) konvertiert werden und umgekehrt,
und bei dem die Signalisierungspakete zwischen der Paketsteuereinheit (36) und dem Teilnehmer (48, 56) übertragen werde.

2. Verfahren nach Anspruch 1, **dadurch gekennzeichnet, dass** das Netzelement eine Vermittlungsstelle (12, 22) eines leitungsvermittelnden Telekommunikationsnetzes ist.

3. Verfahren nach einem der vorhergehenden Ansprüche, **dadurch gekennzeichnet, dass** der Teilnehmer (48, 56) als ein mit Hilfe der Konzentratorschnittstelle (10, 44, 52, 58, 60) angeschlossener Teilnehmer (48, 56) in dem Netzelement (12, 22) verwaltet und betrieben wird und die der Konzentratorschnittstelle (10, 44, 52, 58, 60) zur Verfügung gestellten Ressourcen für den Teilnehmer (48, 50) genutzt werden.

4. Verfahren nach einem der vorhergehenden Ansprüche, **dadurch gekennzeichnet, dass** dem Teilnehmer (48, 56) in dem Netzelement (12, 22) die Funktionen eines Hauptanschlusses oder eines Nebenstellenanschlusses verfügbar sind.

5. Verfahren nach einem der vorhergehenden Ansprüche, **dadurch gekennzeichnet, dass** die Konzentratorschnittstelle (10, 44, 52, 58, 60) als V5.2-Schnittstelle, TR303-Schnittstelle, V93-Schnittstelle und/oder V95-Schnittstelle verwaltet und betrieben wird.

6. Verfahren nach einem der vorhergehenden Ansprüche, **dadurch gekennzeichnet, dass** die Konzentratorschnittstelle (10, 44, 52, 58, 60) PCM-Verbindungen oder SDH-Verbindungen zum bidirektionalen Übertragen von Nutzdaten zu einer Schnittstelleneinheit (46, 54) hat, die Nutzdaten zwischen einem im paketvermittelnden Kommunikationsnetz (50) und einem im leitungsvermittelnden Kommunikationsnetz üblichen Format konvertiert.

7. Verfahren nach Anspruch 6, **dadurch gekennzeichnet, dass** die Schnittstelleneinheit ein Mediagateway (46, 54) ist, das die Nutzdaten zwischen Paket- und TDM-Format bidirektional umsetzt..

8. Verfahren nach Anspruch 6 oder 7, **dadurch gekennzeichnet, dass** die Steuerung der Schnittstelleneinheit (46, 54) über Anschlussgruppen (18, 20) des Netzelementes (12) erfolgt, die die Konzentratorschnittstelle (10, 44, 52, 58, 60) steuern.

9. Verfahren nach einem der vorhergehenden Ansprüche, **dadurch gekennzeichnet, dass** die Konzentratorschnittstelle (10, 44, 52, 58, 60) in einer Datenbasis des Netzelementes (12, 22) als Konzentratorschnittstelle (10, 44, 52, 58, 60) zum Anschluss von Teilnehmern (48, 56) des paketvermittelnden Kommunikationsnetzes (50) gekennzeichnet ist.

10. Verfahren nach einem der vorhergehenden Ansprüche, **dadurch gekennzeichnet, dass** der Teilnehmer (48, 56) in einer Datenbasis des Netzelementes (12, 22) als Teilnehmer (48, 56) des paketvermittelnden Kommunikationsnetzes (50) geführt ist.

11. Verfahren nach Anspruch 10, **dadurch gekennzeichnet, dass** der Konzentratorschnittstelle (10, 44, 52, 58, 60) zum Anschluss von Teilnehmern (48, 56) des paketvermittelnden Kommunikationsnetzes (50) nur Teilnehmer (48, 56) zugeordnet werden können, die Teilnehmer (48, 56) des paketvermittelnden Kommunikationsnetzes (50) sind.

12. Verfahren nach einem der vorhergehenden Ansprüche, **dadurch gekennzeichnet, dass** Funktionen der Konzentratorschnittstelle (10, 44, 52, 58, 60) zum Anschluss von Teilnehmern (48, 56) des paketvermittelnden Kommunikationsnetzes (50) die nicht benötigt werden, deaktiviert werden und/oder Meldungen dieser Funktionen im Netzelement (12, 22) unterdrückt werden.

13. Verfahren nach einem der vorhergehenden Ansprüche, **dadurch gekennzeichnet, dass** Teilnehmer des leitungsvermittelnden Kommunikationsnetzes nur einer Konzentratorschnittstelle des Netzelements (12, 22) zugeordnet werden, die zum Anschluss von Teilnehmern des leitungsvermittelnden Kommunikationsnetzes vorgesehen ist.

14. Verfahren nach einem der vorhergehenden Ansprüche, **dadurch gekennzeichnet, dass** die Zuordnung der Teilnehmer (48, 56) zu den Konzentratorschnittstellen (10, 44, 52, 58, 60) des Netzelementes (12, 22) und/oder zu Anschlusseinheiten (18, 20) des Netzelementes (12, 22) in einer Datenbasis der Vermittlungsstelle (12, 22) mit Hilfe einer Bedienschnittstelle des Netzelementes (12, 22) erfolgt.

15. Verfahren nach einem der vorhergehenden Ansprüche, **dadurch gekennzeichnet, dass** das Netzelement (12) mehrere Konzentratorschnittstellen (10, 44, 52, 58, 60) ansteuert, denen jeweils mehrere Teilnehmer (48, 56) zuordenbar sind.

16. Verfahren nach einem der vorhergehenden Ansprüche, **dadurch gekennzeichnet, dass** die Signalisierung des Teilnehmers (48, 56) des paketvermittelnden Kommunikationsnetzes (50) mit Hilfe einer physikalischen Schnittstelle der Paketsteuereinheit (36) oder des Nachrichtenvereilsystems (14) des Netzelementes (12, 22) zwischen Teilnehmern (48, 56) und dem Netzelement (12, 22) ausgetauscht wird.

17. Verfahren nach einem der vorhergehenden Ansprüche, **dadurch gekennzeichnet, dass** im Netzelement (12, 22) dem Teilnehmer (48, 56) eine Rufnummer zugeordnet ist, dass der Teilnehmer (48, 56) im paketvermittelnden Kommunikationsnetz (50) eine Teilnehmeradresse hat, und dass die Zuordnung zwischen der Teilnehmeradresse und der Rufnummer mit Hilfe einer Steuereinheit erfolgt.

18. Verfahren nach Anspruch 16, **dadurch gekennzeichnet, dass** die Steuereinheit eine dem Netzelement (12, 22) zugeordnete Datenverarbeitungsanlage ist.

19. Verfahren nach einem der vorhergehenden Ansprüche, **dadurch gekennzeichnet, dass** der Teilnehmer (48, 56) als Teilnehmer mit einem ISDN-Basisanschluss im Netzelement (12, 22) verwaltet wird.

20. Verfahren nach Anspruch 19, **dadurch gekennzeichnet, dass** der ISDN-Basisanschluss ein ISDN-Basisanschluss in Punkt zu Punkt Konfiguration oder ein ISDN-Basisanschluss in Punkt zu Mehrpunkt Konfiguration ist.

21. Verfahren nach einem der vorhergehenden Ansprüche, **dadurch gekennzeichnet, dass** bei einer Verbindung zwischen dem Teilnehmer (48) und einem zweiten Teilnehmer (56) die Nutzdaten mit Hilfe des Netzelementes (12, 22) übertragen werden.

22. Verfahren nach einem der Ansprüche 1 bis 20, **dadurch gekennzeichnet, dass** bei einer Verbindung zwischen dem Teilnehmer (48) und einem weiteren Teilnehmer (56) des paketvermittelnden Kommunikationsnetzes (50) die Nutzdaten mit Hilfe des paketvermittelnden Kommunikationsnetzes (50) direkt zwischen den Teilnehmern (48, 56) übertragen werden.

23. Verfahren nach einem der vorhergehenden Ansprüche, **dadurch gekennzeichnet, dass** das paketvermittelnde Kommunikationsnetz ein Internet-Protokoll basiertes Netz (50) ist.

24. Verfahren nach einem der vorhergehenden Ansprüche, **dadurch gekennzeichnet, dass** die Signalisierung des Teilnehmers (48, 56) gemäß dem H.323-Standard oder gemäß dem SIP-Standard erfolgt.

25. Netzelement zur Verarbeitung von Signalisierungsdaten und zur Verbindungssteuerung von Teilnehmern eines paketvermittelnden Kommunikationsnetzes
mit einer Konzentratorschnittstelle (10, 44, 52, 58, 60), die mit Hilfe mindestens einer Anschlusseinheit (18, 20) des Netzelementes (12, 22) gesteuert wird, wobei diese Konzentratorschnittstelle (10, 44, 52, 58, 60) Ressourcen des Netzelementes (12, 22) zur Verfügung stellt,
mit einem paketvermittelnden Kommunikationsnetz (50) mit mindestens einem Teilnehmer (48, 56),
mit mindestens einer Paketsteuereinheit (36), die ein Nachrichtenverteilsystem (14) des Netzelementes (12, 22) mit der Anschlusseinheit (18, 20) verbindet,
wobei zwischen der Paketsteuereinheit (36) des Netzelementes (12, 22) und der Anschlusseinheit (18, 20) des Netzelements (12, 22) über das Nachrichtenverteilsystem (14) des Netzelementes (12, 22) Signalisierungsdaten zur Teilnehmersignalisierung übertragen werden,
die Signalisierungsdaten des Netzelementes (12, 22) in Signalisierungspakete des paketvermittelnden Kommunikationsnetzes (50) von der Paketsteuereinheit (36) konvertiert werden und umgekehrt,
und wobei die Signalisierungspakete zwischen der Paketsteuereinheit (36) und dem Teilnehmer (48, 56) übertragen werden.

26. Netzelement nach Anspruch 25, **dadurch gekennzeichnet, dass** das Netzelement (12, 22) sowohl Baueinheiten einer konventionellen Vermittlungsstelle eines leitungsvermittelnden Kommunikationsnetzes als auch mindestens eine Paketsteuereinheit (36) enthält.

27. Netzelement nach einem der vorhergehenden Ansprüche 25 und 26, **dadurch gekennzeichnet, dass** das paketvermittelnde Kommunikationsnetz ein Internet-Protokoll basiertes Netz (50) ist.

28. Netzelement nach einem der vorhergehenden Ansprüche 25 bis 27, **dadurch gekennzeichnet, dass** die Signalisierung des Teilnehmers (48, 56) gemäß dem H.323-Standard oder gemäß dem SIP-Standard erfolgt.

## Claims

1. Method for processing signalling data and for controlling connections in a packet-switching communications network,
wherein a packet-switching communications network (50) includes at least one subscriber (48, 56)
a network element (12, 22) controls a concentrator interface (10, 44, 52, 58, 60) using at least one line trunk unit (18, 20) and makes resources available to said concentrator interface (10, 44, 52, 58, 60),
signalling data is transmitted between at least one packet control unit (36) of the network element (12, 22) and the line trunk unit (18, 20) of the network element (12, 22) via a message buffer system (14) of the network element (12, 22) for subscriber signalling of the subscriber (48, 56),
the signalling data of the network element (12, 22) is converted by the packet control unit (36) to signalling packets of the packet-switching communications network (50) and vice versa,
and wherein the signalling packets are transmitted between the packet control unit (36) and the subscriber (48, 56).

2. Method according to claim 1, **characterised in that** the network element is a switching centre (12, 22) of a circuit-switching telecommunications network.

3. Method according to one of the preceding claims, **characterised in that** the subscriber (48, 56) is administered and operated in the network element (12, 22) as a subscriber (48, 56) which is connected using the concentrator interface (10, 44, 52, 58, 60) and the resources made available to the concentrator interface (10, 44, 52, 58, 60) are used for the subscriber (48, 50).

4. Method according to one of the preceding claims, **characterised in that** the functions of a main line or an extension are available to the subscriber (48, 56) in the network element (12, 22).

5. Method according to one of the preceding claims, **characterised in that** the concentrator interface (10, 44, 52, 58, 60) is administered and operated as a V5.2 interface, a TR303 interface, a V93 interface and/or a V95 interface.

6. Method according to one of the preceding claims, **characterised in that** the concentrator interface (10, 44, 52, 58, 60) has PCM connections or SDH connections for the bidirectional transmission of payload data to an interface unit (46, 54), which converts the payload data between a format which is customary in the packet-switching communications network (50) and a format which is customary in the circuit-switching communications network.

7. Method according to claim 6, **characterised in that** the interface unit is a media gateway (46, 54) which converts the payload data bidirectionally between packet format and TDM format.

8. Method according to claim 6 or 7, **characterised in that** the interface unit (46, 54) is controlled via line trunk groups (18, 20) of the network element (12), which control the concentrator interface (10, 44, 52, 58, 60).

9. Method according to one of the preceding claims, **characterised in that** the concentrator interface (10, 44, 52, 58, 60) is **characterised in** a database of the network element (12, 22) as a concentrator interface (10, 44, 52, 58, 60) for connecting subscribers (48, 56) of the packet-switching communications network (50).

10. Method according to one of the preceding claims, **characterised in that** the subscriber (48, 56) is managed in a database of the network element (12, 22) as a subscriber (48, 56) of the packet-switching communications network (50).

11. Method according to claim 10, **characterised in that** the concentrator interface (10, 44, 52, 58, 60) for connecting subscribers (48, 56) of the packet-switching communications network (50) can be assigned only subscribers (48, 56) which are subscribers (48, 56) of the packet-switching communications network (50).

12. Method according to one of the preceding claims, **characterised in that** functions of the concentrator interface (10, 44, 52, 58, 60) for connecting subscribers (48, 56) of the packet-switching communications network (50) which are not required are deactivated and/or messages of these functions are suppressed in the network element (12, 22).

13. Method according to one of the preceding claims, **characterised in that** subscribers of the circuit-switching communications network are assigned to only one concentrator interface of the network element (12, 22), which is provided for connecting subscribers of the circuit-switching communications network.

14. Method according to one of the preceding claims, **characterised in that** assignment of the subscribers (48, 56) to the concentrator interfaces (10, 44, 52, 58, 60) of the network element (12, 22) and/or to line trunk units (18, 20) of the network element (12, 22) is carried out in a database of the switching centre (12, 22) using an operator interface of the network element (12, 22).

15. Method according to one of the preceding claims, **characterised in that** the network element (12) activates a plurality of concentrator interfaces (10, 44, 52, 58, 60), to which a respective plurality of subscribers (48, 56) can be assigned.

16. Method according to one of the preceding claims, **characterised in that** the signalling of the subscriber (48, 56) of the packet-switching communications network (50) is exchanged between subscribers (48, 56) and the network element (12, 22) using a physical interface of the packet control unit (36) or the message buffer system (14) of the network element (12, 22).

17. Method according to one of the preceding claims, **characterised in that** a call number is assigned to the subscriber (48, 56) in the network element (12, 22), the subscriber (48, 56) in the packet-switching communications network (50) has a subscriber address, and the assignment between the subscriber address and the call number is made using a control unit.

18. Method according to claim 16, **characterised in that** the control unit is a data processing system which is assigned to the network element (12, 22).

19. Method according to one of the preceding claims, **characterised in that** the subscriber (48, 56) is administered as a subscriber with an ISDN basic access in the network element (12, 22).

20. Method according to claim 19, **characterised in that** the ISDN basic access is an ISDN basic access in point-to-point configuration or an ISDN basic access in point-to-multipoint configuration.

21. Method according to one of the preceding claims, **characterised in that** the payload data is transmitted using the network element (12, 22) when there is a connection between the subscriber (48) and a second subscriber (56).

22. Method according to one of claims 1 to 20, **characterised in that** the payload data is transmitted directly between the subscribers (48, 56) using the packet-switching communications network (50) when there is a connection between the subscriber (48) and a further subscriber (56) of the packet-switching communications network (50).

23. Method according to one of the preceding claims, **characterised in that** the packet-switching communications network is an internet-protocol-based network (50).

24. Method according to one of the preceding claims, **characterised in that** the signalling of the subscriber (48, 56) is carried out in accordance with the H.323 standard or the SIP standard.

25. Network element for processing signalling data and for controlling connections of subscribers of a packet-switching communications network
with a concentrator interface (10, 44, 52, 58, 60) which is controlled using at least one line trunk unit (18, 20) of the network element (12, 22), said concentrator interface (10, 44, 52, 58, 60) making available resources of the network element (12, 22),
with a packet-switching communications network (50) with at least one subscriber (48, 56),
with at least one packet control unit (36), which connects a message buffer system (14) of the network element (12, 22) to the line trunk unit (18, 20),
with signalling data for subscriber signalling being transmitted between the packet control unit (36) of the network element (12, 22) and the line trunk unit (18, 20) of the network element (12, 22) via the message buffer system (14) of the network element (12, 22), the signalling data of the network element (12, 22) being converted to signalling packets of the packet-switching communications network (50) by the packet control unit (36) and vice versa,
and with the signalling packets being transmitted between the packet control unit (36) and the subscriber (48, 56).

26. Network element according to claim 25, **characterised in that** the network element (12, 22) contains both units of a conventional switching centre of a circuit-switching communications network and at least one packet control unit (36).

27. Network element according to one of the preceding claims 25 and 26, **characterised in that** the packet-switching communications network is an internet-protocol-based network (50).

28. Network element according to one of the preceding claims 25 to 27, **characterised in that** the signalling of the subscriber (48, 56) is carried out in accordance with the H.323 standard or the SIP standard.

## Revendications

1. Procédé pour le traitement de données de signalisation et pour la commande de connexions dans un réseau de communication à commutation de paquets,
dans lequel un réseau de communication à commutation de paquets (50) comprend au moins un abonné (48, 56),
un élément de réseau (12, 22) commande une interface de concentrateur (10, 44, 52, 58, 60) à l'aide d'au moins une unité de connexion (18, 20) et met à disposition des ressources à celle-ci,
des données de signalisation pour la signalisation d'abonné de l'abonné (48, 56) sont transmises entre au moins une unité de commande de paquets (36) de l'élément de réseau (12, 22) et l'unité de connexion (18, 20) de l'élément de réseau (12, 22) par l'intermédiaire d'un système de distribution de messages (14) de l'élément de réseau (12, 22),
les données de signalisation de l'élément de réseau (12, 22) sont converties par l'unité de commande de paquets (36) en paquets de signalisation du réseau de communication à commutation de paquets (50) et vice-versa,
et dans lequel les paquets de signalisation sont transmis entre l'unité de commande de paquets (36) et l'abonné (48, 56).

2. Procédé selon la revendication 1, **caractérisé en ce que** l'élément de réseau est un centre de commutation d'un réseau de télécommunication à commutation de circuits.

3. Procédé selon l'une quelconque des revendications précédentes, **caractérisé en ce que** l'abonné (48, 56) est géré et opéré dans l'élément de réseau (12, 22) en tant qu'un abonné (48, 56) connecté à l'aide de l'interface de concentrateur (10, 44, 52, 58, 60) et **en ce que** les ressources mises à disposition à l'interface de concentrateur (10, 44, 52, 58, 60) sont utilisées pour l'abonné (48, 56).

4. Procédé selon l'une quelconque des revendications précédentes, **caractérisé en ce que** les fonctions d'un branchement principal ou d'un branchement avec postes supplémentaires sont disponibles à l'abonné (48, 56) dans l'élément de réseau (12, 22).

5. Procédé selon l'une quelconque des revendications précédentes, **caractérisé en ce que** l'interface de concentrateur (10, 44, 52, 58, 60) est gérée et opérée en tant qu'interface V5.2, interface TR303, interface V93 et/ou interface V95.

6. Procédé selon l'une quelconque des revendications précédentes, **caractérisé en ce que** l'interface de concentrateur (10, 44, 52, 58, 60) a des liaisons PCM ou des liaisons SDH pour la transmission bidirectionnelle de données utiles vers une unité d'interface (46, 54) qui convertit des données utiles entre un format usuel dans le réseau de communication à commutation de paquets (50) et un format usuel dans le réseau de communication à commutation de circuits.

7. Procédé selon la revendication 6, **caractérisé en ce que** l'unité d'interface est une passerelle média (46, 54) qui convertit les données utiles de manière bidirectionnelle entre le format de paquets et le format TDM.

8. Procédé selon la revendication 6 ou 7, **caractérisé en ce que** la commande de l'unité d'interface (46, 54) est réalisée par l'intermédiaire de groupes de connexion (18, 20) de l'élément de réseau (12), qui commandent l'interface de concentrateur (10, 44, 52, 58, 60).

9. Procédé selon l'une quelconque des revendications précédentes, **caractérisé en ce que** l'interface de concentrateur (10, 44, 52, 58, 60) est identifiée dans une base de données de l'élément de réseau (12, 22) en tant qu'interface de concentrateur (10, 44, 52, 58, 60) pour le raccordement d'abonnés (48, 56) du réseau de communication à commutation de paquets (50).

10. Procédé selon l'une quelconque des revendications précédentes, **caractérisé en ce que** l'abonné (48, 56) est géré dans une base de données de l'élément de réseau (12, 22) en tant qu'abonné (48, 56) du réseau de communication à commutation de paquets (50).

11. Procédé selon la revendication 10, **caractérisé en ce que** seulement des abonnés (48, 56), qui sont des abonnés (48, 56) du réseau de communication à commutation de paquets (50), peuvent être affectés à l'interface de concentrateur (10, 44, 52, 58, 60) destinée au raccordement d'abonnés (48, 56) du réseau de communication à commutation de paquets (50).

12. Procédé selon l'une quelconque des revendications précédentes, **caractérisé en ce que** des fonctions de l'interface de concentrateur (10, 44, 52, 58, 60) destinée au raccordement d'abonnés (48, 56) du réseau de communication à commutation de paquets (50), qui ne sont pas nécessaires, sont désactivées et/ou **en ce que** des messages de ces fonctions sont supprimés dans l'élément de réseau (12, 22).

13. Procédé selon l'une quelconque des revendications précédentes, **caractérisé en ce que** des abonnés du réseau de communication à commutation de circuits peuvent être affectés seulement à une interface de concentrateur de l'élément de réseau (12, 22), qui est prévue pour le raccordement d'abonnés du réseau de communication à commutation de circuits.

14. Procédé selon l'une quelconque des revendications précédentes, **caractérisé en ce que** l'affectation des abonnés (48, 56) aux interfaces de concentrateur (10, 44, 52, 58, 60) de l'élément de réseau (12, 22) et/ou à des unités de connexion (18, 20) de l'élément de réseau (12, 22) est réalisée dans une base de données du centre de commutation (12, 22) à l'aide d'une interface de commande de l'élément de réseau (12, 22).

15. Procédé selon l'une quelconque des revendications précédentes, **caractérisé en ce que** l'élément de réseau (12) commande plusieurs interfaces de concentrateur (10, 44, 52, 58, 60), auxquelles plusieurs abonnés (48, 56) peuvent être respectivement affectés.

16. Procédé selon l'une quelconque des revendications précédentes, **caractérisé en ce que** la signalisation de l'abonné (48, 56) du réseau de communication à commutation de paquets (50) est échangée entre des abonnés (48, 56) et l'élément de réseau (12, 22) à l'aide d'une interface physique de l'unité de commande de paquets (36) ou du système de distribution de messages (14) de l'élément de réseau (12, 22).

17. Procédé selon l'une quelconque des revendications précédentes, **caractérisé en ce que** dans l'élément de réseau (12, 22), un numéro d'appel est affecté à l'abonné (48, 56), **en ce que** l'abonné (48, 56) a une adresse d'abonné dans le réseau de communication à commutation de paquets, et **en ce que** l'affectation entre l'adresse d'abonné et le numéro d'appel est réalisée à l'aide d'une unité de commande.

18. Procédé selon la revendication 16, **caractérisé en ce que** l'unité de commande est une installation de traitement de données affectée à l'élément de réseau (12, 22).

19. Procédé selon l'une quelconque des revendications précédentes, **caractérisé en ce que** l'abonné (48, 56) est géré en tant qu'abonné ayant un accès de base RNIS dans l'élément de réseau (12, 22).

20. Procédé selon la revendication 19, **caractérisé en ce que** l'accès de base RNIS est un accès de base RNIS à configuration point-à-point ou un accès de base RNIS à configuration point-multipoint.

21. Procédé selon l'une quelconque des revendications précédentes, **caractérisé en ce que** lors d'une liaison entre l'abonné (48) et un deuxième abonné (56), les données utiles sont transmises à l'aide de l'élément de réseau (12, 22).

22. Procédé selon l'une quelconque des revendications 1 à 20, **caractérisé en ce que** lors d'une liaison entre l'abonné (48) et un deuxième abonné (56) du réseau de communication à commutation de paquets (50), les données utiles sont transmises directement entre les abonnés (48, 56) à l'aide du réseau de communication à commutation de paquets (50).

23. Procédé selon l'une quelconque des revendications précédentes, **caractérisé en ce que** le réseau de communication à commutation de paquets est un réseau (50) basé sur le protocole Internet.

24. Procédé selon l'une quelconque des revendications précédentes, **caractérisé en ce que** la signalisation de l'abonné (48, 56) est réalisée selon la norme H.323 ou selon la norme SIP.

25. Elément de réseau destiné au traitement de données de signalisation et à la commande de connexions d'abonnés d'un réseau de communication à commutation de paquets
comprenant une interface de concentrateur (10, 44, 52, 58, 60) qui est commandée à l'aide d'au moins une unité de connexion (18, 20) de l'élément de réseau (12, 22), cette interface de concentrateur (10, 44, 52, 58, 60) mettant à disposition des ressources de l'élément de réseau (12, 22), comprenant un réseau de communication à commutation de paquets (50) ayant au moins un abonné (48, 56),
comprenant au moins une unité de commande de paquets (36) qui connecte un système de distribution de messages (14) de l'élément de réseau (12, 22) à l'unité de connexion (18, 20), des données de signalisation étant transmises, pour la signalisation d'abonné, entre l'unité de commande de paquets (36) de l'élément de réseau (12, 22) et l'unité de connexion (18, 20) de l'élément de réseau (12, 22) par l'intermédiaire du système de distribution de messages (14) de l'élément de réseau (12, 22),
les données de signalisation de l'élément de réseau (12, 22) étant converties par l'unité de commande de paquets (36) en paquets de signalisation du réseau de communication à commutation de paquets (50) et vice-versa,
et les paquets de signalisation étant transmis entre l'unité de commande de paquets (36) et l'abonné (48, 56).

26. Elément de réseau selon la revendication 25, **caractérisé en ce que** l'élément de réseau (12, 22) comprend aussi bien des composants d'un poste de commutation conventionnel d'un réseau de communication à commutation de circuits qu'au moins une unité de commande de paquets (36).

27. Elément de réseau selon l'une quelconque des revendications précédentes 25 et 26, **caractérisé en ce que** le réseau de communication à commutation de paquets est un réseau (50) basé sur le protocole Internet.

28. Elément de réseau selon l'une quelconque des revendications précédentes 25 à 27, **caractérisé en ce que** la signalisation de l'abonné (48, 56) est réalisée selon la norme H.323 ou selon la norme SIP.
